(19) Europäisches Patentamt
European Patent Office
Office européen des brevets

(11) Publication number: **0 115 253**
**B1**

(12) **EUROPEAN PATENT SPECIFICATION**

(45) Date of publication of patent specification: **27.01.88**

(51) Int. Cl.$^4$: **C 08 C 19/20,** C 08 C 19/22

(21) Application number: **83810625.0**

(22) Date of filing: **28.12.83**

(54) **Perfluoroalkyl substituted polymers.**

(30) Priority: **03.01.83 US 455099**

(43) Date of publication of application:
**08.08.84 Bulletin 84/32**

(45) Publication of the grant of the patent:
**27.01.88 Bulletin 88/04**

(84) Designated Contracting States:
**BE CH DE FR GB IT LI**

(58) References cited:
**US-A-2 556 856**
**US-A-3 068 187**
**US-A-3 842 053**

(73) Proprietor: **CIBA-GEIGY AG**
**Klybeckstrasse 141**
**CH-4002 Basel (CH)**

(72) Inventor: **Mueller, Karl Friedrich**
**119 West 77th Street**
**New York New York 10024 (US)**

EP 0 115 253 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to perfluoroalkyl substituted polymers.

Polymers containing long perfluoroalkyl groups pendant to the main chain are widely used as oil- and water repellent coatings on textiles and paper. Usually such polymers are prepared by polymerization of a perfluoroalkyl group containing monomers, for instance esters of acrylic, methacrylic, or fumaric acid with $R_f(CH_2)_nOH$ as described in U.S. 3,068,187, 3,304,278, 4,150,225 or by polycondensation of perfluoroalkyl-substituted diols with diisocyanates, as described in U.S. 3,499,940, 3,720,639, 3,935,277, 4,046,944, and 4,098,742.

In each case fluoroalkyl groups containing monomers are the starting material for the corresponding polymer. Due to the bulkiness of the perfluoroalkyl group and its high molecular weight it is difficult and in most structures impossible to reach the high degrees of polymerization necessary to get coatings or shaped articles of great toughness. In addition, the insolubility of highly fluorinated monomers in common organic solvents complicates the synthesis. For these reasons, the perfluoroalkyl substituted polymers reported in the literature are copolymers with non-fluorinated monomers; in this manner high molecular weight polymers can be prepared, but of a relatively low fluorine content.

In U.S. 3,842,053 are described adducts of perfluoroalkyl iodides to homo- and copolymers of butadiene. These adducts may be dehydroiodinated by treatment with a strong base in order to produce a less corrosive product.

It has now been found that when perfluoroalkyl substituted thiols are added to a preformed, unsaturated polymer, highly fluorinated prepolymers are obtained which can be used to make tough, abrasive-resistant and oil and water repellent coatings or articles.

It is thus one object of the present invention to provide novel perfluoroalkyl-alkylene substituted polymers or copolymers of 1,3-butadiene or isoprene with from 40 to 4000 connected backbone carbon atoms in the chain, optionally terminated on one or both ends thereof with a condensation reactive group and containing at least one unit of one of the following structures for every 100 backbone carbon atoms:

(A) 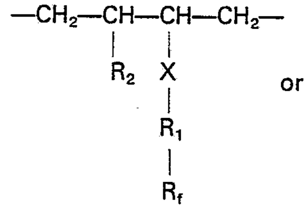 or (B) 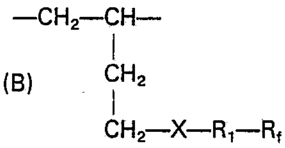

wherein X is —S—, —SO—, or —$SO_2$—, $R_1$ is alkylene of from 1 to 16 carbon atoms or is —$R_1'$—Q—$R_3$—, wherein $R_1'$ and $R_3$ are alkylene groups of 1 to 16 carbon atoms, with the sum of carbon atoms being not greater than 25 and Q is —O—, or —$NR_4$—, wherein $R_4$ is hydrogen or alkyl of 1 to 4 carbon atoms, $R_2$ is hydrogen or methyl and $R_f$ is perfluoroalkyl or perfluoroalkoxyperfluoroalkyl each having having 4 to 20 carbon atoms.

Another object is a process for the manufacture of the inventive perfluoroalkyl-alkylene substituted polymers.

Still another object is a process for rendering various substrates oil- and water-repellent.

$R_1$ in the structure units (A) and (B) denotes alkylene having 1 to 16 carbon atoms. Suitable alkylene radicals are thus for example methylene, ethylene, propylene, butylene, hexylene, further octyl ene, nonylene, decylene, undecylene, dodecylene, tetradecylene and hexadeylene as well as isomers thereof. Preferred are those alkylene radicals $R_1$, which contain 2 to 6 carbon atoms. Ethylene is mostly preferred. Further, $R_1$ denotes a linking group of the formula —$R'_1$—Q—$R_3$—, wherein $R'_1$ and $R_3$ are alkylene of 1 to 16 carbon atoms and the sum of the carbon atoms in $R_1'$ and $R_3$ is not be greater than 25. Q denotes a divalent radical such as —O— or —$NR_4$—, wherein $R_4$ is hydrogen or alkyl of 1 to 4 carbon atoms such as methyl, ethyl, propyl or butyl. Hydrogen and methyl are the preferred radicals $R_4$.

$R_2$ is hydrogen or methyl.

$R_f$ denotes perfluoroalkyl or perfluoroalkoxyperfluoroalkyl each having 4 to 20 carbon atoms and may be present as mixtures. These radicals can be represented by the formula $F_{2n+1}C_n{+}C_mF_{2m}{+}_k$, wherein n is 4 to 20 if k is 0, and n+m is 4 to 20 if k is 1. n-Perfluoroalkyl radicals, especially those containing 4 to 18 carbon atoms, are preferred, as well as those perfluoroalkoxyperfluoroalkyl radicals having 4 to 13 carbon atoms.

The linking group X is a sulphur containing divalent group such as —S—, —SO— or —$SO_2$, where —S— is more preferred.

In preferred perfluoroalkyl-alkylene substituted polymers according to the present invention, $R_1$ denotes alkylene of 2 to 6 carbon atoms, $R_2$ is hydrogen or methyl, $R_f$ is a n-perfluoroalkyl of 4 to 18 carbon atoms and X is —S—.

In addition to groups (A) and (B), the polymer may also contain up to 40 mole percent of other conventional copolymer groups (C), preferably

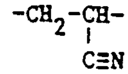 or

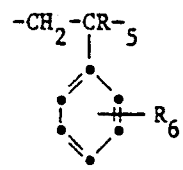

wherein $R_5$ is hydrogen or lower alkyl and $R_6$ is hydrogen or $C_1$ to $C_6$— alkyl, incorporated into the original poly-diene by copolymerization therewith.

Other conventional copolymer groups (C) include those copolymer units of conventional monomers, such as methyl, ethyl and $C_6$ to $C_{12}$ aryl esters of acrylates, methacrylates, maleates, fumarates, and itaconates; vinyl esters having 1 to 18 carbon atoms in the ester group, such as vinyl acetate, butyrate, laurate, stearate and benzoate; vinyl chloroacetate and isopropenyl acetate; $C_1$ to $C_{20}$ alkyl vinyl ethers, including methyl vinyl ether and n-octadecyl vinyl ether; vinyl halides, including vinyl chloride, vinylidene chloride, vinyl fluoride; methacrylonitrile; chloroprene; halogenated butadienes such as 2-fluorobutadiene, tri- and pentafluorobutadiene; and halogenated styrenes, such as p-chlorostyrene.

Furthermore, the polymer may contain up to 20% mole of structural units (D):

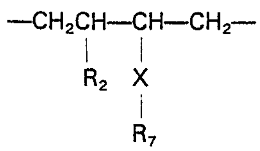

or

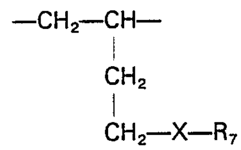

wherein $R_7$ is an aliphatic, aromatic or aryl-alkylene group of up to 30 carbon atoms which is unsubstituted or substituted with functional groups including hydroxyl, amino, mono- or di(lower) alkylamino, carboxy, siloxane or halogen, and X and $R_2$ are as defined above.

Structures (A) are obtained by addition of perfluoroalkyl-alkylene thiols onto the internal double bonds of polydienes whose monomer units are connected in the 1,4-manner; structures (B) are derived by addition to the external double bonds of polydienes whose monomer units are connected in the 1,2-manner. Polymers containing (A) where X is —S—, can be considered copolymers of perfluoroalkyl-alkylene-vinyl thioether, polymers with units (B) are copolymers of perfluoroalkyl alkylenebutene-1,2-thioether.

Preferably, the novel polymers according to the present invention consist of polymers or copolymers of butadiene and/or isoprene, connected in the 1,4- and/or 1,2 manner (head-tail and head-head) and which may contain units of acrylonitrile or styrene or alpha-methylstyrene or other copolymerizable monomers (C), and which as a molecular weight of 500—500,000, substituted by perfluoroalkyl alkylene group, as in (A) and (B), to such an extent that at least 1 perfluoroalkyl alkyl group is present for every 100 connected carbon backbone atoms. The polymer may further be substituted by linear or branched aliphatic, cycloaliphatic or aromatic hydrocarbon moieties with from 2 to 30 carbon atoms, which moieties may also contain hydroxy, amino, carboxy, or other functional groups, with up to about 20 of such non-fluorinated groups for every 100 connected backbone carbon atoms as in (D). All pendant substituent groups, fluorinated or non-fluorinated, are advantageously connected to the original poly-diene by either sulfur, sulfoxide or sulfone linkages.

The process for the manufacture of the novel $R_f$-modified polymers comprises reacting a perfluoroalkyl-alkylene thiol $R_f$—$R_1$—SH, wherein $R_f$ and $R_1$ are as defined, with polybutadiene or isoprene or a copolymer thereof in a suitable solvent or heat in the presence of a free-radical generating initiator. The corresponding sulfoxides and sulfones are advantageously derived from the thio-ether product by an oxidation step. These polymers are useful as non-wettable, hard coatings for metal, glass, ceramics, masonry, wood, fibers, textiles, plastics or other substrates or they can be fabricated into tough polyurethane rubbers, epoxies or polyesters.

The perfluoroalkylthiols employed in the manufacture of the compounds of this invention are well known in the art. For example, thiols of the formula $R_f$—$R_1$—SH have been described in U.S. 2,894,991; 2,961,470; 2,965,677; 3,088,849; 3,172,190; 3,544,663 and 3,655,732.

Thus U.S. 3,655,732 discloses mecraptans of formula

$$R_f—R_1—SH,$$

wherein $R_1$ is alkylene of 1 to 16 carbon atoms and $R_f$ is perfluoroalkyl and teaches that halides of formula $R_f$—$R_1$—Hal are well known; reaction of $R_fI$ with ethylene under free-radical conditions gives $R_f(CH_2CH_2)_aI$ while reaction of $R_fCH_2I$ with ethylene gives $R_fCH_2(CH_2CH_2)_aI$ as is further taught in U.S. 3,088,849; 3,145,222, 2,965,659 and 2,972,638.

U.S. 3,655,732 further discloses compounds of formula

$$R—R_1—X—R_3—SH,$$

wherein $R_1$ and $R_3$ are alkylene of 1 to 16 carbon atoms, with the sum of the carbon atoms of $R_1$ and $R_3$ being no greater than 25; $R_f$ is perfluoroalkyl of 4 through 14 carbon atoms and X is —S— or —$NR_4$—, where $R_4$ is hydrogen or alkyl of 1 through 4 carbon atoms.

U.S. 3,544,663 teaches that the mercaptan of the formula

$$R_fCH_2CH_2SH,$$

wherein $R_f$ is perfluoroalkyl of 5 to 13 carbon atoms, can be prepared by reacting the perfluoroalkyl alkylene iodide with thiourea or by adding $H_2S$ to a perfluoroalkyl substituted ethylene ($R_f$—CH=$CH_2$), which in turn can be prepared by dehydrohalogenation of the $R_f$—$CH_2CH_2$—Hal.

The reaction of the iodide $R_f$—$R_1$—I with thiourea followed by hydrolysis to obtain the mercaptan $R_f$—$R_1$—SH is the preferred synthetic route. The reaction is applicable to both linear and branched chain iodides. Many useful perfluoroalkoxyalkyl iodides are described in U.S. 3,514,487 of the general formula

$$(CF_3)_2CFO\ CF_2CF_2(CH_2CH_2)_mI,$$

wherein m is 1 to 3.

Particularly preferred herein are the thiols of formula

$$R_fCH_2CH_2SH,$$

wherein $R_f$ is perfluoroalkyl of 6 to 12 carbon atoms. These $R_f$-thiols can be prepared from $R_fCH_2CH_2I$ and thiourea in very high yield.

Preferred perfluoroalkylalkylenethiols and perfluoroalkoxyperfluoroalkylalkylenethiols are those of the following formulae:

$C_4F_9CH_2CH_2SH$, $C_6F_{13}CH_2CH_2SH$, $C_8F_{17}CH_2CH_2SH$, $C_{10}F_{21}CH_2CH_2SH$, $C_{12}F_{25}CH_2CH_2SH$ and

$CF_3$
\
$CFO(CF_2CF_2)_{1-8}CH_2CH_2SH$, where
/
$CF_3$

$C_6F_{13}CH_2CH_2SH$, $C_8F_{17}CH_2CH_2SH$ and $C_{10}F_{21}CH_2CH_2SH$ are especially preferred, and mixtures thereof.

Suitable polydienes for the manufacture of the novel polymers are homo- or copolymers of butadiene, such as polybutadienes with ratios of 1,4 to 1,2 connected units of 80:20 to 10:90. These are typical values of what is commonly called 1,4-polybutadiene and 1,2-polybutadiene.

Poly-(styrene-co-butadiene), poly(acrylonitrile-co-butadiene) and poly-(alpha-methyl styrene-co-butadiene) are especially preferred copolymers. The polymers can be terminated by functional groups on one or both ends, such as: carboxy-, hydroxy-, mercapto-, amino-, epoxy- and isocyanate groups. The polymers have typically a molecular weight of about 400—10,000, preferably of about 900—6,000. Polybutadienes with terminal condensation reactive groups are especially useful since they can be used in polycondensation reactions, for instance in polyurethane and epoxy formulations. Functional groups may also be attached to the backbone.

The reaction is carried out in an ampoule or a flask under nitrogen with good mixing. Initially the reaction mixture is often whitish at room temperature due to the insolubility of $R_fCH_2CH_2SH$ in the diene-polymer solution. After the reaction is completed (about 3 hours at about 80°C in the case of benzoyl peroxide as initiator) the cooled-down solution is clear, unless the fluorine content is so high that the product is insoluble.

Any solvent which will dissolve the polydiene at the reaction temperature can be used. Such solvents are aliphatic and aromatic hydrocarbons, chlorinated hydrocarbons, ketones, esters, ethers and alcohols. Useful solvents include heptane, acetone, methyl-ethyl ketone, dimethyl-formamide, tetrahydrofuran, N-methylpyrrolidone, and butyl acetate. Alternately, the reaction can be carried out in bulk, if the viscosity of the polymer at reaction temperature is sufficiently low. The free radical generating initiators can be any of the commonly used peroxy compounds with a suitable half-life time at the reaction temperature, such as benzoyl peroxide, lauroyl peroxide, or it can be of the azo-type, for instance, Azo-bis-isobutyronitrile. The initiators are used at concentrations of from 0.01% to 1%, based on weight of reactants. 50—70% of the double bonds in commercial 1,2-polybutadiene (containing 90% of 1,2-connected units) can be substituted with $R_fCH_2CH_2SH$, but only 10 to 20% of the double bonds in 1,4-polybutadiene (containing 20% of 1,2-connected units). Highly fluorinated products can be obtained as clear viscous resins either in solution or in bulk and which have little or no 1,2-double bonds left, according to IR analysis.

An $R_f$-thiol of a molecular weight of about 500 and the polydiene can be reacted in weight ratios from 1:99 to 90:10 in the case of 1,2-polybutadiene, 1:99 to 60:40 in the case of 1,4-polybutadiene. In the case of diene copolymers the upper ratio is correspondingly lower because of the lower concentration of double bonds. Polymers containing up to 70% $R_fCH_2CH_2SH$ (about 45% by weight of fluorine) are soluble in

heptane, polymers with higher $R_f$ content need increasing amounts of FREON® or hexafluoroxylene for dissolution.

Any unreacted $R_f$-thiol can be removed by stripping the product in vacuo at elevated temperatures.

The $R_f$-substituted polydienes can be used as is, or they can be extended with other suitable polymers and applied to substrates to form coatings with low free surface energy, which are therefore highly oil- and water repellent. They can be cured by peroxides or metal salts and heat through the remaining double bonds and they can be reacted with other double bond containing compounds, such as acrylates, methacrylates, styrenes, vinylesters, vinylethers, fumarates, maleates, etc. If they contain terminal reactive groups, they can be used in polycondensation reactions to form, for instance, polyurethanes. It is also possible to carry out more reactions with the remaining double bonds, such as addition of thioglycolic or thiopropionic acids to make a water soluble resin, or of thiols in general (n-alkyl thiols). Other addition-reactions which can be carried out are addition of chlorine or bromine, of hydrochloric acid, of vinyl compounds such as acrylate, fumarate, styrene, maleic anhydride.

In the following examples (as well as throughout the whole specification) $R_fCH_2CH_2SH$ denotes a mixture of thiols with the following distribution of $R_f$ chain lengths:

$C_6F_{13}$—: 25% by weight $C_8F_{17}$—: 50% by weight $C_{10}F_{21}$—: 25% by weight

1,4-polybutadiene (poly-BD resin from Sinclair) used in the examples refers to a low molecular weight resin, containing 20% 1,4-cis, 60% 1,4-trans and 20% 1,2-connected units, 1,2-polybutadiene "HYSTL" (Trade Name) resin from HYSTL Development Corp. is a low molecular weight resin containing 10% 1,4-trans and 90% 1,2-units.

Oxidation of the $R_f$-thioether substituted polymers to the sulfoxides or sulfones is preferably carried out in solution using any of the conventional oxidizing agents, like organic peroxides such as peroxy acetic acid, hydrogen peroxide, permanganate or chromate. Alternatively, the oxidation can be carried out in the solid dry state by surface oxidation of a coating, for instance with peroxide.

The following examples 1 to 15 describe the addition reaction of $R_f$-alkylene thiols to different polybutadienes. Unless otherwise indicated, the % are percent by weight.

Example 1

2 g $R_fCH_2CH_2SH$, 2 g 1,4-polybutadiene (MW:1000), 0.1 g azo-bis-isobutyronitrile (AIBN) and 6.7 g heptane were sealed in an ampoule under nitrogen and shaken at 60°C for 3½ hours. After cooling, the reaction product was obtained as a clear solution in 99% yield as determined by stripping of volatiles in vacuo at 100°C.

Example 2

Example 1 was repeated, but with 1,2-polybutadiene (MW:1000). The product was again obtained as a clear solution in 99% yield.

Examples 3 to 5

Using the same procedure as in Example 1, $R_fCH_2CH_2SH$ and 1,4-polybutadiene (1,4-p-Bu) (MW:1000) were reacted in different ratios with the following results:

TABLE 1

| Example No. | $R_fCH_2CH_2SH$ (g) | 1,4-p-Bu (g) | AIBN (g) | Heptane (g) | $R_f$—$CH_2CH_2SH$ Conversion (%) |
|---|---|---|---|---|---|
| 3 | 4 | 2 | 0.1 | 9 | 79 |
| 4 | 6 | 2 | 0.1 | 10 | 63 |
| 5 | 10 | 2 | 0.1 | 14 | 55 |

Examples 6 to 10

$R_fCH_2CH_2SH$ was reacted as in Example 1 with different amounts of 1,2-polybutadiene with the following results:

TABLE 2

| Example No. | $R_fCH_2CH_2SH$ (g) | 1,4-p-Bu MW:1000 (g) | AIBN (g) | Heptane (g) | Conversion of $R_fCH_2CH_2SH$ (%) |
|---|---|---|---|---|---|
| 6 | 4 | 2 | 0.1 | 9 | 99 |
| 7 | 6 | 2 | 0.1 | 10 | 96 |
| 8 | 10 | 2 | 0.1 | 14 | 94 |
| 9 | 10 | 2 | 0.1 | 14 | 84 |
| 10 | 15 | 2 | 0.2 | 17 | 75 |

Examples 11 and 12

A butadiene-styrene copolymer (OH-terminated; MW:4000, 25 mole % styrene) was reacted as in Example 1 with different amounts of $R_fCH_2CH_2SH$, with the following results:

TABLE 3

| Example No. | $R_fCH_2CH_2SH$ (g) | Copolymer (g) | AIBN (g) | Heptane (g) | Conversion of $R_fCH_2CH_2SH$ (%) |
|---|---|---|---|---|---|
| 11 | 2 | 2 | 0.1 | 6 | 75 |
| 12 | 4 | 2 | 0.1 | 8 | 72 |

Examples 13 and 14

The above experiments were repeated, but with a butadiene-acrylonitrile copolymer (OH-terminated; 15 mole % acrylonitrile; MW: 3800) instead of the styrene copolymer and methyl-ethylketone (MEK) instead of heptane. The results were as follows:

TABLE 4

| Example No. | $R_fCH_2CH_2SH$ (g) | Copolymer (g) | AIBN (g) | MEK (g) | Conversion of $R_fCH_2CH_2SH$ (%) |
|---|---|---|---|---|---|
| 13 | 2 | 2 | 0.1 | 6 | 80 |
| 14 | 4 | 2 | 0.1 | 8 | 63 |

Example 15

50 g, 1,2-polybutadiene (MW: 1000; OH-terminated) and 70 g $R_fCH_2CH_2SH$ were heated in a 3-neck flask equipped with stirrer, thermometer, condenser and nitrogen inlet tube. At 90°C the white, creamy mixture developed a slow exotherm reaction, during which the mixture became clear. After 2 hours reaction time 0.2 g AIBN were added and the reaction continued at 80°C for 4 more hours. Unreacted thiol was stripped off in vacuo at 90°C using a nitrogen purge for ½ hour. The product was a clear, colorless and almost odorless resin of very high viscosity. Yield: 116 g (94%).

The following examples describe the synthesis of anionic and cationic water dispensible $R_f$-alkylene thiol substituted polybutadiene.

Example 16

50 g 1,2-polybutadiene (MW: 1000; OH-terminated) and 50 g $R_fCH_2CH_2SH$ were reacted in 30 MEK with 0.25 g AIBN to form the adduct at 75°C in 4 hours in 98% yield. To the clear solution 42.6 g mercapto-propionic acid (HS—$CH_2CH_2COOH$) were added together with 30 g MEK and 0.2 g AIBN and the reaction continued for 3 hours. The reaction product was obtained in 96% yield as a viscous 68% solution in MEK. Most of the double bonds had been consumed as shown by IR-investigations. This resin, after neutralization with triethylamine, formed a clear solution in water.

Example 17

Preparation of Polyurethane Coatings

50 g (0.05 mol) 1,2-polybutadiene (MW: 1000; OH-terminated) and 50 g (0.1 mol) $R_fCH_2CH_2SH$ were reacted in 30 g dry MEK using 0.25 g AIBN at 75°C for 4 hours. Then 22.2 g (0.1 mol) of isophorone diisocyanate were added together with 0.05 g triethylamine and the mixture was stirred for 2 hours at 50°C, after which time the content of isocyanate has fallen to 6.1%, indicating formation of an isocyanate terminated prepolymer.

A film cast from this prepolymer solution was left to cure on the air and formed a hard, glossy film, having a free surface energy of 13 $dynes \cdot cm^{-1}$. To another sample of the prepolymer solution were added a molar excess of N,N-dimethyl-propane-1,3-diamine. After all —NCO groups had reacted, acetic acid was added, followed by water. A viscous, white-bluish emulsion was formed.

A film cast from this emulsion had an oil- but not water- repellent surface and a free surface energy of $1,2 \cdot 10^{-4} J \cdot cm^{-1}$.

The following examples describe the synthesis of $R_f$-substituted polyurethanes and epoxies from $R_f$-alkylene thiol substituted, functionalized polybutadienes.

Example 18

12,5 g 1,2-polybutadiene (MW: 1430, OH-terminated) was reacted in bulk with 70 g $R_fCH_2CH_2SH$ using 0.25 AIBN as initiator and letting the exotherm rise to 100°C. A solids determination indicated after 4 additional hours at 70°C nearly complete conversion. 3.25 g isophorone diisocyanate were added dissolved in 50 g dry MEK together with 3 drops triethylamine and the mixture was stirred at 60°C for six hours. Another 50 g dry MEK were added and the solution cooled to room temperature.

By evaporating the solvent a straw colored rubber could be isolated from this solution, which was extremely tough, although not cross-linked. It contained, as determined by elemental analysis, 44% fluorine.

Example 19

In a similar manner a tough and flexible perfluoroalkyl substituted polybutadiene-polyurethane rubber was prepared from 25 g OH-terminated 1,2-polybutadiene (MW: 1430), 70 g $R_fCH_2CH_2SH$ and 7.5 g isophorone diisocyanate.

Example 20

51 g of an epoxy group containing polybutadiene (MW: 800; oxirane content 6.9%) were reacted at 50°C in bulk with 55 g $R_fCH_2CH_2SH$, using three times 0.1 g VAZO—52 (Trade Name, azoinitiator from Du Pont) over five hours. Unconverted $R_fCH_2CH_2SH$ was stripped off in vacuo at 90°C. Conversion was 88% and the oxirane content of the product 3.22% (determined by titration). 5 g of this product were mixed with an equimolar amount of the compound of the formula

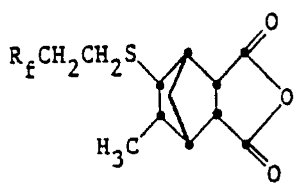

and 0.05 g dimethyl-benzylamine as accelerator and heated to 100°C for eight hours. A brown, clear, tough disc of an epoxy-polymer was obtained which was not wetted by heptane and had a water pick-up in 30 days of 0.55%.

The following examples show the use of $R_f$-modified polybutadiene diols in the manufacture of polyurethane finishes.

Example 21

To a 500 ml three neck flask, equipped with stirrer, thermometer, reflux-condenser, nitrogen-inlet tube and heating mantle were added 92.25 g of OH-terminated 1,2-poly-butadiene (MW: 1000) modified with $R_fCH_2CH_2SH$ in a ratio of one residual double bond per $R_f$-chain, 1.27 g trimethylhexamethylenediisocyanate, 92.4 g butyl-acetate, 0.46 dibutyltindilaurate 10% in butylacetate and 0.12 g triethyl amine 10% in butyldichloride solution charged and under stirring heated to 80°C. After 9 hours most of the diisocyanate was consumed and 3.65 g dimerdiisocyanate, 1.073 g N-methyldiethanolamine and 4.72 g butylacetate were added. All isocyanate was reacted after 90 min. stirring at 80°C. A yellow paste with a solid content of 50% and a calculated fluorine content of 51.2% in solids was collected.

The paste was postemulsified in the following manner:

86 g deionized water, containing 0.5 g acetic acid (100%) and 3.06 g of methyl-polyoxyethylene (15)-coco ammonium chloride were heated in a 500 ml beaker to 80°C. 57 g of the $R_f$-modified PU-solution described above were heated to 80°C and poured into the water/emulsifier solution under stirring with a high speed mixer.

This pre-emulsion was homogenized with a high pressure homogenizer for 10 minutes and $300 \cdot 10^5$Pa pressure. After transforming the emulsion to a 500 ml flask, butylacetate was distilled under vacuum.

An off white emulsion was collected with a solid content of 22.0% and a fluorine content of 10.7%.

A polyester/cotton fabric treated from treatment bath, combining 1.9% of the $R_f$-emulsion described above, 7% of a glycol-urea-resin and 1% of a $ZnNO_3$-solution (50%), at a 50% add-on level, dried and cured for 5 minutes at 150°C showed an oil repellency rating of 6 (according to the AATCC-test method 118—1972) a spray rating of 100 (AATCC-test 22—1978).

The following example shows the oxidation of the thio-ethers to the corresponding sulfone and their performance as oil- and water repellent textile treatments.

Example 22

100 g of a 65% butylacetate solution of $C_8F_{17}CH_2CH_2SH$— adduct to 1,2-polybutadiene (1000 MW) having a ratio of 1 $R_f$-mercaptan to 3 unsaturated groups on the polymer backbone, was poured into a solution of 7.15 g polyoxyethylene (10)-hexadecyl ammonium-acetate and 60 g $H_2O_2$ (30%) in 153.6 g deionized water using a high speed mixer. This pre-emulsion was homogenized for 10 minutes on the highpressure homogenizer (Type "Gaulin") at $300 \cdot 10^5$Pa pressure and 60°C. The obtained emulsion had a solid content of 19.76% and a calculated fluorine content of 8.3%.

The emulsion was applied onto a polyester/cotton poplin at a 50% solid add-on level with a treatment bath of the following composition:

0.2% acetic acid, 7% of a 53% solution of glyoxal urea resin, 1% of a 50% $Zn(NO_3)_2$ solution and 3.6% of the emulsion maintained above. The fabric was dried and cured for 5 minutes at 150°C.

It had an oil repellency of 5 according to the AATCC-test 118—1972 and a spray rating of 100 (AATCC-test 22—1974), whereas the same emulsion, not treated with $H_2O_2$ during the emulsification had an oil repellency of 1 and a spray rating of 70.

**Claims**

1. A perfluoroalkyl-alkylene substituted polymer or copolymer of 1,3-butadiene or isoprene with from 40 to 4000 connected backbone carbon atoms in the chain, and containing at least one unit of one of the following structures for every 100 backbone carbon atoms:

(A) 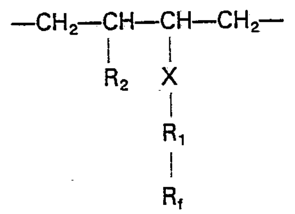 or (B) 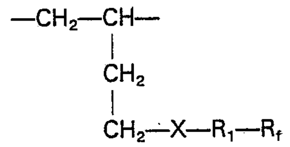

wherein X is —S—, —SO— or —$SO_2$—, $R_1$ is alkylene of from 1 to 16 carbon atoms or is —$R_1'$—Q—$R_3$—, wherein $R_1'$ and $R_3$ are alkylene groups of 1 to 16 carbon atoms, with the sum of carbon atoms being not greater than 25 and Q is —O—, or —$NR_4$—, wherein $R_4$ is hydrogen or alkyl of 1 to 4 carbon atoms, $R_2$ is hydrogen or methyl and $R_f$ is perfluoroalkyl or perfluoroalkoxyperfluoroalkyl each having 4 to 20 carbon atoms.

2. A copolymer according to claim 1, which contains up to 40 mole percent of the copolymer groups

(C) 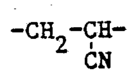 or 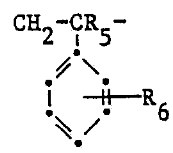 ,

or up to 20 mole percent of the copolymer groups

(D) 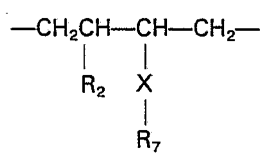 or 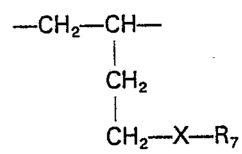

wherein $R_5$ and $R_6$ are hydrogen or $C_1$—$C_6$-alkyl and $R_7$ is an aliphatic, aromatic or aryl-alkylene group of up to 30 carbon atoms which is unsubstituted or substituted by hydroxyl, amino, mono- or di-(lower) alkylamino, carboxy, siloxane or halogen, and X and $R_2$ are as defined.

3. A polymer or copolymer according to claim 1, which is terminated on one or both ends thereof with a condensation reactive group selected from carboxy, hydroxy, mercapto, amino, epoxy or isocyanate groups.

4. A polymer or copolymer according to claim 1, wherein X is —S—; $R_1$ is alkylene of 2 to 6 carbon atoms; $R_2$ is hydrogen or methyl; and $R_f$ is n-perfluoroalkyl of 4 to 18 carbon atoms.

5. A polymer or copolymer according to claim 4, wherein $R_1$ is ethylene and $R_f$ is n-perfluoroalkyl of 4 to 12 carbon atoms.

6. A copolymer according to claim 1, containing about 0.01 to 40 mole percent of said copolymer groups (C) incorporated into the original poly-diene by copolymerization therewith.

7. A polymer or copolymer according to claim 3, which is terminated with said condensation reactive groups at both ends thereof.

8. A polymer or copolymer according to claim 7, wherein the terminal condensation reactive groups are hydroxy.

9. A copolymer according to claim 1, wherein (D) is present in an amount of between 0.01 and 20 mole percent.

10. A process for the manufacture of a polymer or copolymer according to claim 1, which comprises reacting a perfluoroalkylalkylene thiol of the formula $R_f—R_1—SH$, wherein $R_f$ and $R_1$ are as defined in claim 1 with a polymer or copolymer of 1,4-butadiene or isoprene in a suitable solvent under heat in the presence of a free-radical generating initiator, optionally followed by oxidation of the sulfur linking atom to a sulfoxide or sulfone radical.

11. Use of the polymers or copolymers according to claim 1 for rendering metal, glass, ceramics, masonry, wood, fibres and plastics non-wettable.

**Patentansprüche**

1. Perfluoroalkyl-alkylen substituierte Polymere oder Copolymere von 1,3-Butadien oder Isopren mit 40 bis 4000 Kohlenstoffatomen in der C-Polymerkette, die mindestens eine Struktureinheit der Formeln A oder B pro 100 Ketten-C-Atome enthalten:

(A) 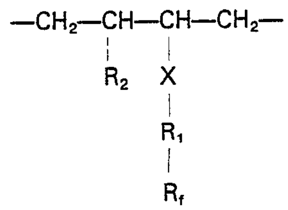

oder

(B) 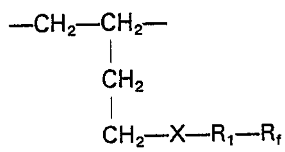

worin X —S—, —SO— oder —$SO_2$— ist, $R_1$ für Alkylen mit 1 bis 16 C-Atomen oder —$R_1'$—Q—$R_3$— steht, worin $R_1'$ und $R_3$ Alkylen mit 1 bis 16 C-Atomen ist und die Summe der C-Atome nicht grösser als 25 ist, Q —O— oder —$NR_4$— darstellt, worin $R_4$ ein Wasserstoffatom oder Alkyl mit 1 bis 4 C-Atomen ist, $R_2$ ein Wasserstoffatom oder Methyl ist und $R_f$ Perfluoralkyl oder Perfluoralkoxyperfluoralkyl mit je 4 bis 20 C-Atomen bedeutet.

2. Copolymere gemäss Anspruch 1, welche bis zu 40 Mol-% Copolymer-gruppen

(C) 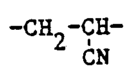 oder 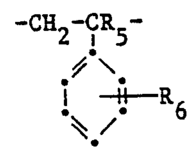 ,

oder bis zu 20 Mol-% Copolymergruppen

(D) 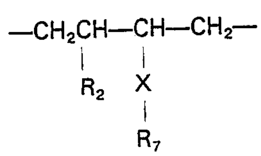 or 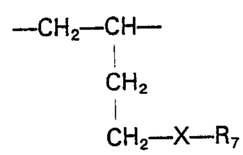

enthalten, worin $R_5$ und $R_6$ ein Wasserstoffatom oder $C_1$—$C_6$-Alkyl bedeuten und $R_7$ eine aliphatische, aromatische oder Aryl-alkylen-Gruppe mit bis zu 30 C-Atomen darstellt, die unsubstituiert oder mit Hydroxyl, Amino, Mono- oder Di-Niederalkyl, Carboxyl, Silyloxy oder Halogen substituiert ist, und X und $R_2$ die zuvor angegebene Bedeutung haben.

3. Polymere oder Copolymere gemäss Anspruch 1, in denen an einem oder beiden Kettenenden eine zur Kondensationen befähigte Gruppe gebunden ist, welche aus der Gruppe Carboxyl, Hydroxyl, —SH, Amino, Epoxid oder Isocyanat ausgewählt ist.

4. Polymere oder Copolymere gemäss Anspruch 1, worin X —S— ist, $R_1$ Alkylen mit 2—6 C-Atomen bedeutet, $R_2$ für ein Wasserstoffatom oder Methyl steht, und $R_f$ n-Perfluoralkyl mit 4 bis 18 C-Atomen bedeutet.

5. Polymere oder Copolymere gemäss Anspruch 4, worin $R_1$ Ethylen ist und $R_f$ n-Perfluoralkyl mit 4 bis 12 C-Atomen bedeutet.

6. Copolymere gemäss Anspruch 1, enthaltend 0,01 bis 40 Mol-% der besagten Copolymergruppen (C), welche in das ursprüngliche Polydien durch Copolymerisation eingearbeitet sind.

7. Polymere oder Copolymere gemäss Anspruch 3, in denen die zur Kondensation befähigte Gruppe an beide Enden gebunden ist.

8. Polymere oder Copolymere gemäss Anspruch 7, worin die zur Kondensation befähigte Gruppe Hydroxyl ist.

9. Copolymere gemäss Anspruch 1, worin (D) in einer Menge zwischen 0,01 und 20 Mol-% enthalten ist.

10. Verfahren zur Herstellung von Polymeren oder Copolymeren gemäss Anspruch 1, bei dem man ein Perfluoralkylalkylenmercaptan der Formel $R_f$-$R_1$-SH worin $R_f$ und $R_1$ die in Anspruch 1 angegebene Bedeutung haben, mit einem Polymer oder Copolymer von 1,4-Butadien oder Isopren in einem geeigneten Lösungsmittel unter Erhitzen und in Gegenwart eines freie Radikale bildenden Initiators reagiert, und gegebenenfalls das Schwefelbrückenatom zu einem Sulfoxid- oder Sulfonrest oxidiert.

11. Verwendung von Polymeren und Copolymeren gemäss Anspruch 1, um Metall, Glas, Keramik, Mauerwerk, Holz, Fasern und Kunststoffe unbenetzbar zu machen.

## Revendications

1. Polymère ou copolymère du butadiène-1,3 ou de l'isoprène portant des radicaux perfluoroalkyl-alkylènes, contenant de 40 à 4000 atomes de carbone reliés dans la chaîne du polymère tronc et renfermant, pour 100 atomes de carbone du polymère tronc, au moins un motif répondant à l'une des formules suivantes:

(A) 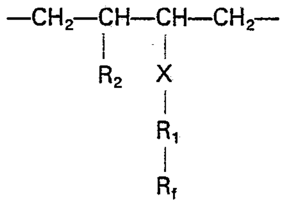 (B) 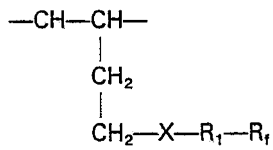

dans lesquelles:

X représente —S—, —SO— ou —$SO_2$—,

$R_1$ représente un radical alkylène contenant de 1 à 16 atomes de carbone ou un radical —$R'_1$—Q—$R_3$— dans lequel $R'_1$ et $R_3$ représentent chacun un radical alkylène contenant de 1 à 16 atomes de carbone, la somme des atomes de carbone étant au plus égale à 25, et Q représente —O— ou un radical —$NR_4$—, le symbole $R_4$ désignant l'hydrogène ou un alkyle en $C_1$—$C_4$,

$R_2$ représente l'hydrogène ou un radical méthyle et

$R_f$ représente un radical perfluoroalkyle ou un radical perfluoroalcoxy-perfluoroalkyle contenant chacun de 4 à 20 atomes de carbone.

2. Copolymère selon la revendication 1, qui contient au plus 40% en moles de radicaux copolymérisés (C):

(C) 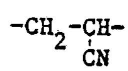 ou 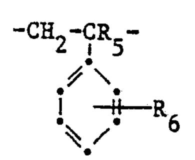 ,

ou au plus 20% en moles de radicaux copolymérisés (D):

(D) 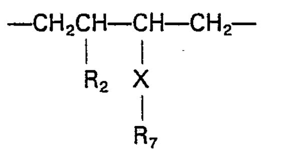 ou 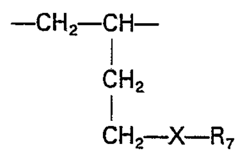

formules dans lesquelles $R_5$ et $R_6$ représentent chacun l'hydrogène ou un alkyle en $C_1$—$C_6$, $R_7$ représente un radical aliphatique, aromatique ou aryl-alkylène qui contient au plus 30 atomes de carbone et qui porte éventuellement un hydroxy, un amino, un mono- ou dialkylamino à alkyle(s) inférieur(s), un carboxy, un siloxane ou un halogène, et X et $R_2$ ont les significations qui leur ont été données plus haut.

3. Polymère ou copolymère selon la revendication 1, qui porte, à l'une de ses extrémités ou aux deux, un radical capable de donner une réaction de condensation qui est choisi dans l'ensemble constitué par les radicaux carboxy, hydroxy, mercapto, amino, époxy et isocyanato.

4. Polymère ou copolymère selon la revendication 1, dans lequel X représente —S, $R_1$ représente un alkylène contenant de 2 à 6 atomes de carbone, $R_2$ représente l'hydrogène ou un radical méthyle, et $R_f$ représente un radical n-perfluoro-alkyle contenant de 4 à 18 atomes de carbone.

5. Polymère ou copolymère selon la revendication 4, dans lequel $R_1$ représente un radical éthylène et $R_f$ représente un radical n-perfluoroalkyle contenant de 4 à 12 atomes de carbone.

6. Copolymère selon la revendication 1 qui contient d'environ 0,01 à 40% en moles de radicaux copolymérisés (C) incorporés dans le polydiène d'origine, par copolymérisation avec celui-ci.

7. Polymère ou copolymère selon la revendication 3, dont chacune des deux extrémité porte un radical réactif capable de donner une réaction de condensation.

8. Polymère ou copolymère selon la revendication 7, dans lequel les radicaux terminaux capables de donner une réaction de condensation sont des radicaux hydroxy.

9. Copolymère selon la revendication 1, dans lequel les radicaux (D) sont présents en une quantité comprise entre 0,01 et 20% en moles.

10. Procédé pour préparer un polymère ou un copolymère selon la revendication 1, procédé selon lequel on fait réagir un perfluoroalkyl-alkylène-thiol répondant à la formule:

$$R_f—R_1—SH$$

dans laquelle $R_f$ et $R_1$ ont les significations qui leur ont été données à la revendication 1, avec un polymère ou un copolymère du butadiène-1,4 ou de l'isoprène, dans un solvant approprié, en chauffant, en présence d'un amorceur engendrant des radicaux libres, puis, si on le désire, on oxyde l'atome de soufre de liaison de manière à le convertir en un radical sulfinyle ou sulfonyle.

11. Application des polymères ou copolymères selon la revendication 1 pour rendre non mouillables des métaux, le verre, la céramique, la maconnerie, let bois, des fibres ou des matières plastiques.